# EUROPÄISCHE PATENTSCHRIFT

(11) **EP 1 812 770 B1**
(45) Veröffentlichungstag und Bekanntmachung des Hinweises auf die Patenterteilung: **29.10.2008**
(21) Anmeldenummer: 05849153.1
(22) Anmeldetag: 10.11.2005
(51) Int. Cl.: F41H 5/26, B60R 1/10, G02B 23/08

(54) **SICHTEINRICHTUNG AN EINEM FAHRZEUG, INSBESONDERE EINEM KAMPFFAHRZEUG**
VIEWING DEVICE MOUNTED ON A VEHICLE, PARTICULARLY ON A COMBAT VEHICLE
APPAREIL DE VISION SUR UN VEHICULE, NOTAMMENT SUR UN VEHICULE DE COMBAT

(30) Priorität: 17.11.2004 DE 202004017818 U
(43) Veröffentlichungstag der Anmeldung: 01.08.2007
(73) Patentinhaber: Krauss-Maffei Wegmann GmbH & Co. KG, 80997 München (DE)
(72) Erfinder: FRIMBERGER, Georg, 85716 Unterschleissheim (DE); FINK, Uwe, 85251 Hebertshausen (DE)
(74) Vertreter: Feder, Wolf-Dietrich
(86) Internationale Anmeldenummer: PCT/DE2005/002019
(87) Internationale Veröffentlichungsnummer: WO 2006/053524

(56) Entgegenhaltungen:
- DE-A1- 1 630 006
- DE-U1- 7 904 227
- US-A- 4 561 733
- US-A- 4 934 246
- US-A- 5 982 536

## Beschreibung

Die vorliegende Erfindung betrifft eine Sichteinrichtung an einem Fahrzeug, insbesondere einem Kampffahrzeug, mit den Merkmalen aus dem Oberbegriff des Patentanspruchs 1.

Eine solche Sichteinrichtung ist aus der US 4 561 733 A bekannt, welche eine Grundlage für den Oberbegriff des Patentanspruchs 1 bildet.

Mit Winkelspiegeln aufgebaute Sichteinrichtungen an Kampffahrzeugen sind an sich bekannt (siehe DE 31 32 912 A1). Da das mit Winkelspiegeln erfassbare Gesichtsfeld nicht besonders groß ist, sind im allgemeinen auf der Dachplatte des Kampffahrzeugs mehrere Winkelspiegel mit unterschiedlichen Ausblickrichtungen angeordnet (siehe z.B. DE 33 05 882 C2).

Bei bekannten Kampffahrzeugen sitzt der Fahrer im Einsatzfall unterhalb der Luke und beobachtet über drei getrennt angeordnete Winkelspiegel die Fahrbahn. Außerhalb des Einsatzfalles wird der Fahrer über eine Hubmechanik in einen geöffneten Lukenausschnitt gehoben und kann dann die Fahrbahn direkt beobachten. Bei einem plötzlich einsetzenden Einsatzfall muss dann eine Schnellabsenkung des Fahrersitzes erfolgen. Nach der Straßenverkehrszulassungsordnung muss der Fahrer, wenn das Kampffahrzeug im normalen Straßenverkehr fährt, in der angehobenen Stellung mit direkter Sicht fahren, da mit den bisherigen Winkelspiegeln eine ausreichende Rundumsicht nicht gewährleistet ist. Die bekannten Sichteinrichtungen haben den Nachteil, dass im Fahrzeug eine aufwendige Hubmechanik für den Fahrersitz installiert werden muss, da auch die Bedienungselemente mit angehoben werden müssen. Dies bedingt bei den ungünstigen Raumverhältnissen im Kampffahrzeug einen großen zusätzlichen Platzbedarf. Weiterhin ist notwendig, dass der Fahrersitz unterhalb einer Luke angeordnet ist, wobei es sich meist um kostenaufwendige spezielle Luken handelt.

Bei den verwendeten Winkelspiegeln ergibt sich weiterhin ein Tunneleffekt, der die Sicht stark einschränkt. Beim Einsatz im Straßenverkehr muss der Fahrer ungeschützt gegenüber Witterungseinflüssen in der angehobenen Stellung mit Direktsicht fahren, und beim Fahren unterhalb der Luke wird häufig ein unterstützender Beifahrer benötigt.

Der Erfindung liegt die Aufgabe zugrunde, eine Sichteinrichtung mit den Merkmalen aus dem Oberbegriff des Patentanspruchs 1 zu schaffen, mit der aus dem Inneren des Fahrzeugs heraus eine so gute Rundumsicht ermöglicht wird, dass das Fahrzeug gemäß der Straßenverkehrszulassungsordnung für eine Fahrt im Straßenverkehr mit im Fahrzeuginneren sitzenden Nutzer, also z.B. dem Fahrer oder Kommandanten, zulassungsfähig ist.

Die Lösung dieser Aufgabe erfolgt erfindungsgemäß mit den Merkmalen aus dem kennzeichnenden Teil des Patentanspruchs 1. Vorteilhafte Weiterbildungen der Erfindung sind in den abhängigen Ansprüchen beschrieben.

Ein Grundgedanke der Erfindung besteht darin, mehrere Winkelspiegel in der Weise unmittelbar aneinander anschließend anzuordnen, dass ein "Panoramawinkelspiegel" gebildet wird, mit dem der Nutzer auch aus dem Fahrzeuginneren heraus ein zusammenhängendes Blickfeld vor sich hat, ähnlich wie hinter einer Windschutzscheibe. Durch die Verwendung eines optischen Systems in jedem der zusammengesetzten Winkelspiegel wird der Strahlengang zu einem parallelen Lichtbündel gebündelt, was zur Folge hat, dass die Durchgangsöffnung durch die Dachplatte minimiert wird. Weiterhin kann durch ein vergrößerndes oder verkleinerndes optisches System der Tunneleffekt der Winkelspiegel so reduziert werden, dass der Eindruck eines Durchblicks wie bei einer Windschutzscheibe entsteht. Infolge des parallelen Lichtbündels kann der Abstand zwischen Einblick- und Ausblickkopf variiert werden, ohne den Strahlengang zu verändern. Die optischen Systeme in den Ausblickköpfen sind so ausgebildet, dass die von den Ausblickköpfen jeweils erfassten Winkelbereiche ohne Überlappungen unmittelbar aneinander anschließen. Dies ist die Voraussetzung dafür, dass das über die Einblickköpfe wiedergegebene Panoramabild keine Lücken, aber auch keine Doppelabbildungen enthält. Laserschutzfilter, Schutzblenden und dergleichen können in den gebündelten Strahlengang eingeschoben werden und es kann ein sehr guter Helligkeitswert des Sichtfeldes erreicht werden.

Eine Luke in der Dachplatte oberhalb des Nutzersitzes ist nicht mehr erforderlich, ebenso wenig eine Hubmechanik mit Schnellabsenkung. Dadurch kann das geringe Platzangebot innerhalb des Kampffahrzeugs besser genutzt werden. Der Schutz des Fahrers bei unerwartet auftretendem Beschuss ist gewährleistet. Witterungseinflüsse sind ausgeschaltet.

Im folgenden werden anhand der beigefügten Zeichnungen Ausführungsbeispiele für eine Sichteinrichtung nach der Erfindung näher erläutert.

In den Zeichnungen zeigen:
Fig. 1 in perspektivischer Darstellung eine Aufsicht von außen auf einen Teil der Dachplatte eines Kampffahrzeugs im Bereich einer Luke mit einer Sichteinrichtung;
Fig. 2 in perspektivischer Darstellung die Sichteinrichtung des Kampffahrzeugs aus einer Richtung links hinter dem Fahrerplatz;
Fig. 3 in einer von oben gesehenen schematischen Darstellung den Strahlengang in der Sichteinrichtung;
Fig. 4 in einer gegenüber Fig. 3 stärker schematisierten Darstellung den Strahlengang an einem der Winkelspiegel der Sichteinrichtung bei einem ersten Ausführungsbeispiel;
Fig. 5 in einer Darstellung analog Fig. 4 den Strahlengang an einem Winkelspiegel der Sichteinrichtung bei einem zweiten Ausführungsbeispiel.

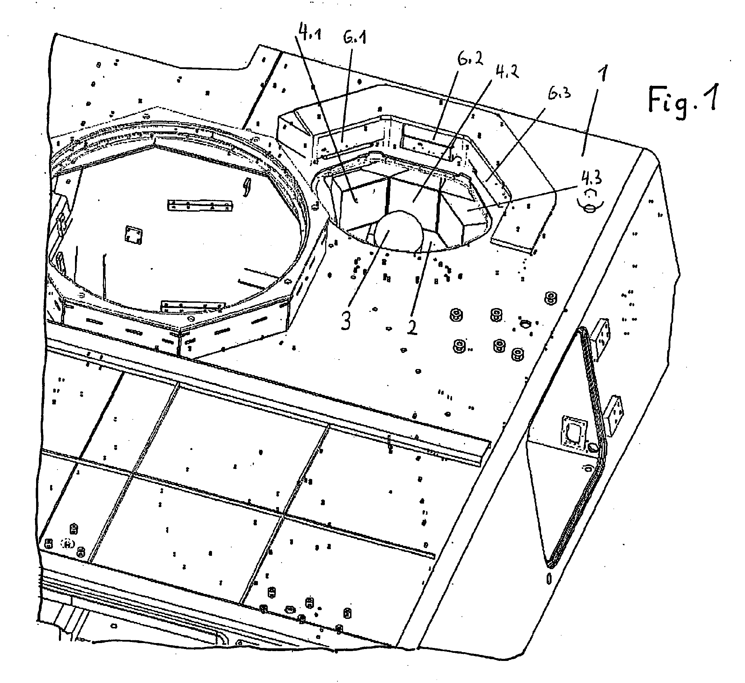

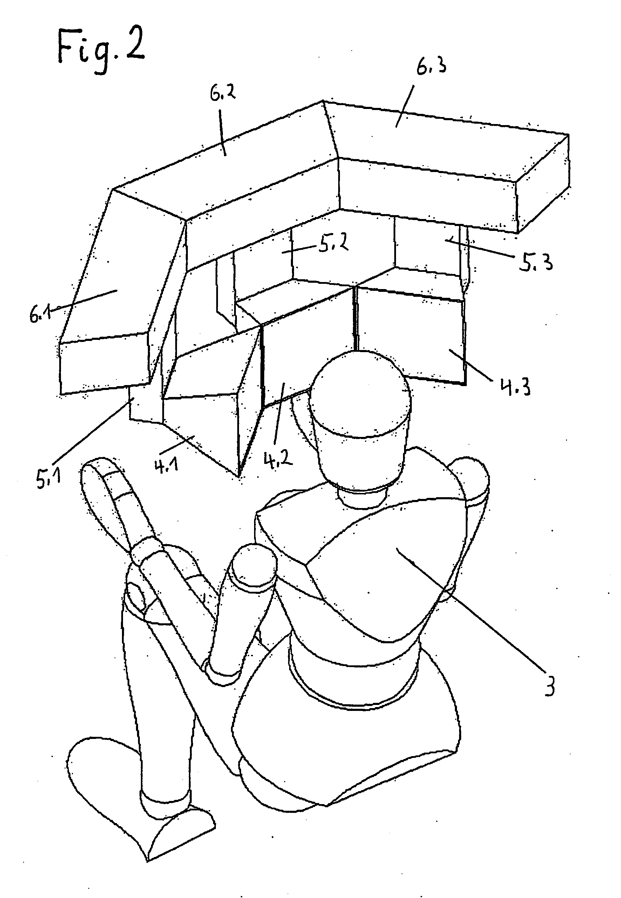

Die Fig. 1 und 2 zeigen einmal von außen und einmal von innen einen Teil eines im übrigen nicht dargestellten Kampffahrzeugs im Bereich des Fahrersitzes.

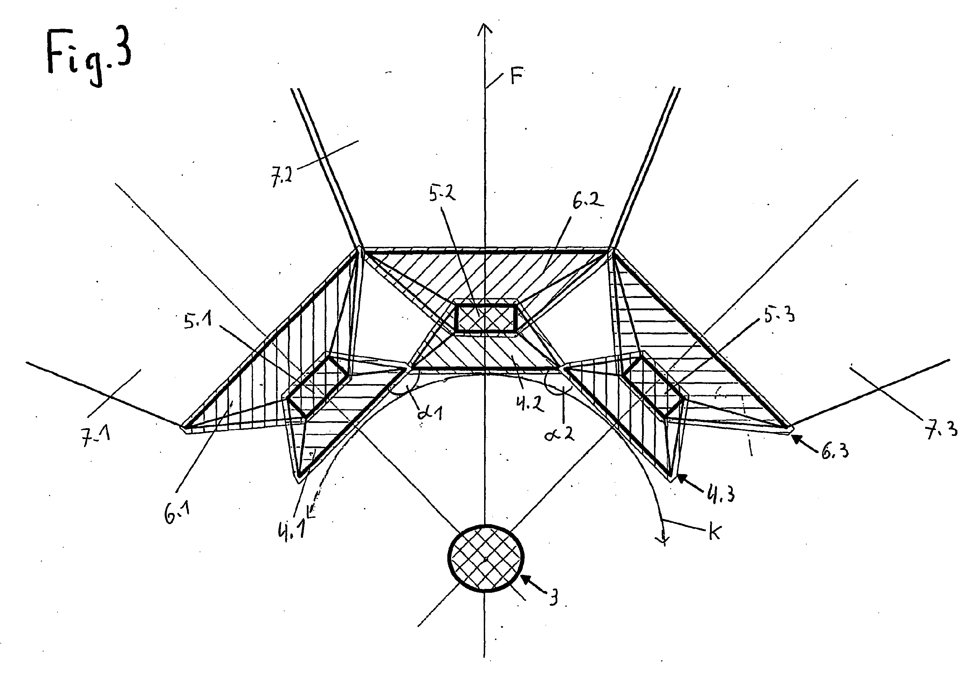

Der Fahrersitz ist unterhalb einer Luke 2 der Dachplatte 1 des Fahrzeugs angeordnet, und im Bereich des Fahrersitzes befinden sich im dargestellten Ausführungsbeispiel drei Winkelspiegel Jeder der Winkelspiegel besitzt einen im Fahrzeuginneren angeordneten Einblickkopf 4.1, 4.2, 4.3, der jeweils über einen Sichtkanal 5.1, 5.2, 5.3 mit einem außen auf der Dachplatte 1 angeordneten Ausblickkopf 6.1, 6.2, 6.3 optisch verbunden ist. In den Einblickköpfen und den Ausblickköpfen sind in aus den Fig. 1 und 2 nicht erkennbarer und an sich bekannter Weise schräg stehende Spiegelflächen angeordnet, durch welche, wie aus Fig. 3 zu entnehmen, jedes in einen Ausblickkopf 6.1 bis 6.3 einfallende Lichtbündel 7.1 bis 7.3 umgelenkt, durch den Sichtkanal 5.1 bis 5.3 geführt, wiederum umgelenkt und in den Einblickkopf 4.1 bis 4.3 geführt wird, wo es aus dem Einblickfenster austritt. Dabei sind die Einblickköpfe 4.1 bis 4.3, wie Fig. 3 zu entnehmen, so angeordnet, dass ihre Einblickfenster unter vorgegebenen Winkeln α1, α2 unmittelbar aneinander anschließend entlang eines den Fahrersitz bzw. den Fahrer 3 teilweise umfassenden Kreisbogens K im Sichtbereich des Fahrers 3 nach innen weisend symmetrisch zur Fahrtrichtung F angeordnet sind. Hierbei gilt im dargestellten Ausführungsbeispiel α1 = α2. In der gleichen Weise und unter dem gleichen Winkel sind auch die Ausblickköpfe 6.1 bis 6.3 so angeordnet, dass ihre Ausblickfenster unmittelbar aneinander anschließend entlang eines Kreisbogens nach außen weisend symmetrisch zur Fahrtrichtung F angeordnet sind. Die optischen Systeme in den Ausblickköpfen 6.1 bis 6.3 sind so ausgebildet, dass die von den Ausblickköpfen jeweils erfassten Winkelbereiche unmittelbar, aber ohne Überlappungen aneinander anschließen, wie dies in Fig. 3 angedeutet ist, so dass in dem über die Einblickköpfe 4.1 bis 4.3 dargestellten Panoramabild keine Lücken, aber auch keine Doppelabbildungen auftreten.

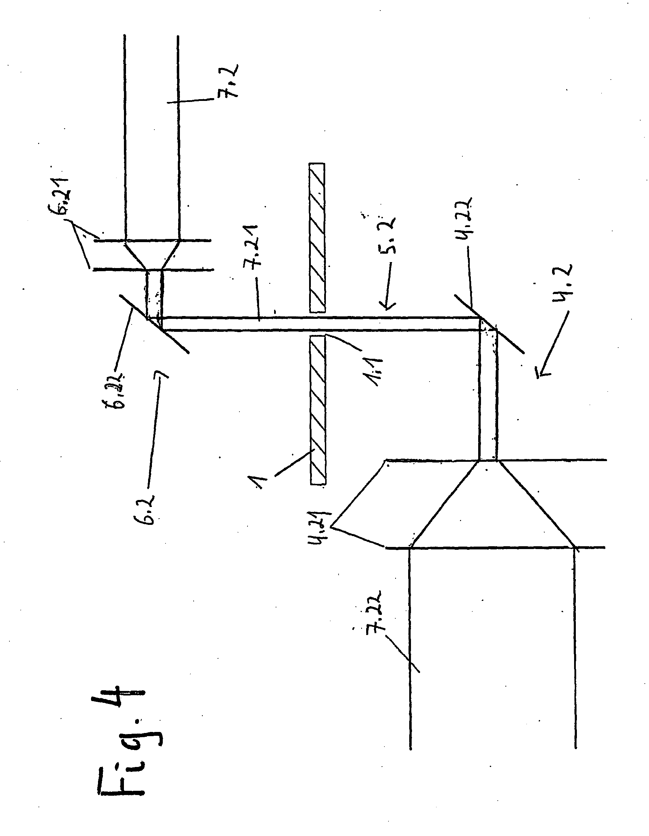

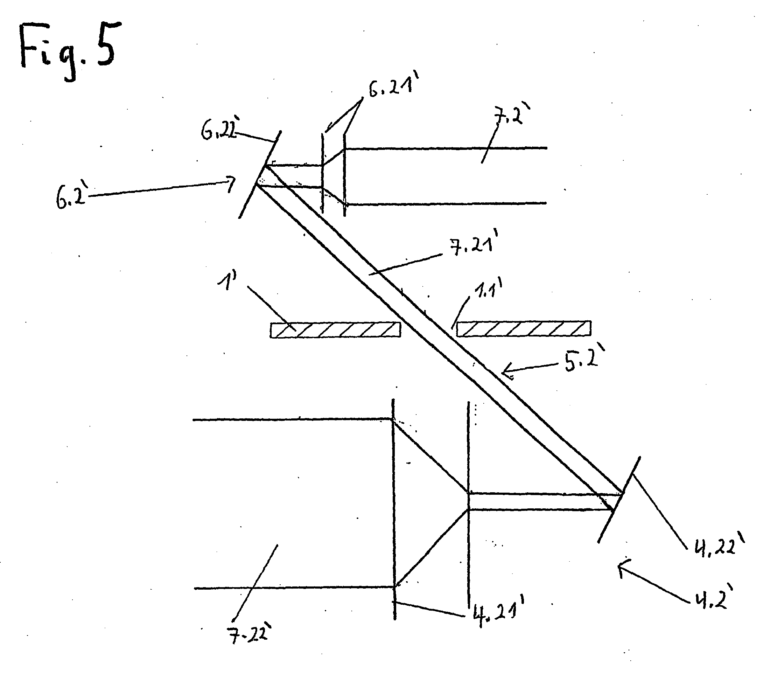

Der genauere Strahlengang durch die so aneinander angesetzten Winkelspiegel ist den Ausführungsbeispielen gem. Fig. 4 und 5 zu entnehmen. Es wird jeweils der Strahlengang durch den mittleren Winkelspiegel mit dem Einblickkopf 4.2, dem Sichtkanal 5.2 und dem Ausblickkopf 6.2 dargestellt.

Im Ausblickkopf 6.2 ist ein optisches System 6.21 vor der Spiegelfläche 6.22 angeordnet, und im Einblickkopf 4.2 ist in Strahlrichtung gesehen hinter der Spiegelfläche 4.22 ein optisches System 4.21 angeordnet. Wie den Figuren zu entnehmen, sind die optischen Systeme 6.21 und 4.21 derart ausgebildet und angeordnet, dass ein teleskopisches System entsteht. Die optischen Systeme können in an sich bekannter und üblicher Weise aus Sammellinsen und Zerstreuungslinsen aufgebaut sein, wobei auch Fresnel-Linsen verwendet werden können. Das teleskopische System kann als galileisches System ausgebildet sein. Das optische System 6.21 des Einblickkopfes 4.2 erzeugt aus dem einfallenden Lichtbündel 7.2 ein paralleles Lichtbündel mit verkleinertem Durchmesser, das an der Spiegelfläche 6.22 das erste Mal im dargestellten Ausführungsbeispiel um 90° reflektiert wird. Das reflektierte Lichtbündel 7.21 durchläuft den Sichtkanal 5.2, wobei es durch eine Öffnung 1.1 in der Dachplatte 1 geführt wird, und trifft auf die Spiegelfläche 4.22, an der es wiederum um 90° umgelenkt wird und durch das optische System 4.21 in das Lichtbündel 7.22 umgewandelt wird, welches durch das nicht dargestellte Einblickfenster des Einblickkopfes 4.2 austritt. Durch die Einschaltung der Spiegelflächen 6.22 und 4.22 wird erreicht, dass das dargestellte teleskopische System ein aufrecht stehendes Bild liefert. Auf diese Weise hat der Fahrer 3 in den Einblickfenstern der Einblickköpfe 4.1 bis 4.3 ein natürliches Panoramabild des von den Ausblickköpfen 6.1 bis 6.3 aufgenommenen Sichtwinkels.

Infolge der parallelen Lichtbündel im Strahlengang ist es möglich, den Einblickkopf 4.2 variabel an den Ausblickkopf 5.2 anzupassen. Durch die Auswahl eines jeweiligen optischen Systems lassen sich die toten Winkel zwischen den jeweiligen Spiegeln minimieren, und der Abstand zwischen Einblick- und Ausblickkopf kann variiert werden, ohne den Strahlengang zu verändern.

Bei dem in Fig. 4 dargestellten Ausführungsbeispiel steht das zwischen den Spiegelflächen 6.22 und 4.22 durch den Sichtkanal 5.2 laufende Lichtbündel 7.21 senkrecht zur Richtung des einfallenden Lichtbündels. Fig. 5 zeigt eine andere Möglichkeit der Anordnung, bei welcher das zwischen den Spiegelflächen laufende Lichtbündel mit der Richtung des einfallenden Lichtbündels einen vorgegebenen spitzen Winkel bildet. In Fig. 5 sind gleiche Bauteile mit den gleichen Bezugsziffern bezeichnet wie in Fig. 4 und mit einem Apostrophstrich versehen.

Die Anordnung arbeitet bei diesem Ausführungsbeispiel in der gleichen Weise wie die Anordnung nach Fig. 4 und braucht deshalb nicht noch einmal ausführlich erläutert zu werden. Sie hat den Vorteil, dass der Ausblickkopf 6.2' kleiner ausgebildet werden kann.

Die Spiegelfläche 6.22' des Ausblickkopfes 6.2' liegt bei dieser Anordnung in Fahrtrichtung gesehen vor der Spiegelfläche 4.22' des Einblickkopfes 4.2'.

Die Anordnung und Ausbildung der Winkelspiegel in der Sichteinrichtung kann so getroffen werden, dass der Strahlengang in den Randbereichen parallel verläuft, so dass keine entfernungsabhängigen Bildüberschneidungen entstehen.

Aufgrund der Ausbildung des Strahlenganges ist es grundsätzlich möglich, dass der Ausblickkopf gegenüber dem Einblickkopf quer zur Fahrtrichtung versetzt angeordnet ist. Weiterhin ist es möglich, einem Ausblickkopf mehrere Einblickköpfe, beispielsweise zwei Einblickköpfe für den Fahrer und den Kommandanten, zuzuordnen, und es ist möglich, einem Einblickkopf mehrere Ausblickköpfe zuzuordnen. In diesem Falle muss der Strahlengang zwischen Ausblickkopf und Einblickkopf umschaltbar ausgebildet sein, oder es muss ein Strahlteiler eingeschaltet sein.

Es hat sich als zweckmäßig erwiesen, wenn die Winkelspiegel aus Acrylglas mit bedampften Spiegelflächen bestehen, um ein möglichst geringes Gewicht und eine geringe Verletzungsgefahr zu erreichen. Weiterhin ist es zweckmäßig, wenn die Ausblickköpfe 6.1 bis 6.3 in nicht dargestellter Weise in eine erhöhte Position anhebbar sind, wodurch die Sichtposition des Fahrers verbessert wird.

## Patentansprüche

1. Sichteinrichtung an einem Fahrzeug, insbesondere einem Kampffahrzeug, bei dem unterhalb einer Dachplatte (1) ein Nutzersitz angeordnet ist und im Bereich des Nutzersitzes mehrere Winkelspiegel angeordnet sind, die jeweils einen im Fahrzeug angeordneten Einblickkopf (4.1, 4.2, 4.3) aufweisen, der über einen durch die Dachplatte (1) geführten Sichtkanal (5.1, 5.2, 5.3) mit einem außen auf der Dachplatte (1) angeordneten Ausblickkopf (6.1, 6.2, 6.3) optisch verbunden ist, wobei zur Umlenkung des einfallenden Lichtbündels im Ausblickkopf (6.1, 6.2, 6.3) und im Einblickkopf (4.1, 4.2, 4.3) jeweils schräg stehende Spiegelflächen angeordnet sind, wobei die Einblickköpfe (4.1 bis 4.3) so angeordnet sind, dass ihre Einblickfenster unter vorgegebenen Winkeln (α1, α2) unmittelbar aneinander anschließend entlang eines den Nutzersitz (3.1) teilweise umfassenden Kreisbogens (K) im Sichtbereich des Nutzers (3) nach innen weisend symmetrisch zur Fahrtrichtung (F) angeordnet sind, und die Ausblickköpfe (6.1 bis 6.3) so angeordnet sind, dass ihre Ausblickfenster unter den gleichen vorgegebenen Winkeln unmittelbar aneinander anschließend entlang eines Kreisbogens nach außen weisend symmetrisch zur Fahrtrichtung angeordnet sind, wobei die Anordnung so ist, dass durch den Sichtkanal (5.2) ein mindestens in Teilabschnitten paralleles Licht-bündel (7.21) mit vorgegenem Durchmesser läuft, **dadurch gekennzeichnet, dass** im Einblickkopf (4.1 bis 4.3) und im Ausblickkopf (6.1 bis 6.3) jeweils ein optisches System (4.21, 6.21) angeordnet ist, wobei die optischen Systeme in Ausblickköpfen (6.1 bis 6.3) so ausgebildet sind, dass die von den Ausblickköpfen jeweils erfassten Winkelbereiche ohne Überlappungen unmittelbar aneinander anschließen und die optischen Systeme im Einblickkopf (4.1 bis 4.3) und im Ausblickkopf (6.1 bis 6.3) in einem solchen Abstand von den jeweiligen Spiegelflächen (4.22, 6.22) angeordnet sind, dass ein teleskopisches System entsteht.

2. Sichteinrichtung nach Anspruch 1, **dadurch gekennzeichnet, dass** die Anordnung so ist, dass das parallele Lichtbündel (7.21) mindestens im Sichtkanal (5.2) senkrecht zur Richtung des einfallenden Lichtbündels (7.2) steht.

3. Sichteinrichtung nach Anspruch 1, **dadurch gekennzeichnet, dass** der Ausblickkopf (6.2') gegenüber dem Einblickkopf (4.2') in oder gegen die Fahrtrichtung versetzt angeordnet ist.

4. Sichteinrichtung nach Anspruch 3, **dadurch gekennzeichnet, dass** die Anordnung so ist, dass das parallele Lichtbündel (7.21') mit der Richtung des einfallenden Lichtbündels (7.2') einen vorgegebenen spitzen Winkel bildet und die Spiegelfläche (6.22') des Ausblickkopfes (6.2') in Fahrtrichtung gesehen vor der Spiegelfläche (4.22') des Einblickkopfes (4.2') liegt.

5. Sichteinrichtung nach einem der Ansprüche 1 bis 4, **dadurch gekennzeichnet, dass** die vorgegebenen Winkel (α1, α2) der aneinander anschließenden Ausblickfenster so gewählt und der Strahlengang der Winkelspiegel so ausgelegt sind, dass die Randbereiche der einfallenden Lichtbündel parallel verlaufen und keine Bildüberschneidungen entstehen.

6. Sichteinrichtung nach einem der Ansprüche 1 bis 5, **dadurch gekennzeichnet, dass** die Winkelspiegel aus Acrylglas mit bedampften Spiegelflächen bestehen.

7. Sichteinrichtung nach einem der Ansprüche 1 bis 6, **dadurch gekennzeichnet, dass** in den Strahlengang jedes Winkelspiegels ein Filter einschaltbar ist.

8. Sichteinrichtung nach einem der Ansprüche 1 bis 7, **dadurch gekennzeichnet, dass** in den Strahlengang jedes Winkelspiegels eine Blende einschaltbar ist.

9. Sichteinrichtung nach einem der Ansprüche 1 bis 8, **dadurch gekennzeichnet, dass** die Ausblickköpfe (6.1, 6.2, 6.3) in eine erhöhte Position anhebbar sind.

10. Sichteinrichtung nach einem der Ansprüche 1 bis 9, **dadurch gekennzeichnet, dass** der Ausblickkopf (6.1, 6.2, 6.3) gegenüber dem Einblickkopf (4.1, 4.2, 4.3) quer zur Fahrtrichtung versetzt angeordnet ist.

11. Sichteinrichtung nach einem der Ansprüche 1 bis 10, **dadurch gekennzeichnet, dass** mindestens einem Teil der Ausblickköpfe (6.1, 6.2, 6.3) jeweils mehr als ein Einblickkopf (4.1, 4.2, 4.3) zugeordnet ist.

12. Sichteinrichtung nach einem der Ansprüche 1 bis 10, **dadurch gekennzeichnet, dass** mindestens einem Teil der Einblickköpfe (4.1, 4.2, 4.3) jeweils mehr als ein Ausblickkopf (6.1, 6.2, 6.3) zugeordnet ist.

13. Sichteinrichtung nach Anspruch 11 oder 12, **dadurch gekennzeichnet, dass** bei einem Ausblickkopf (6.1, 6.2, 6.3) mit mehreren Einblickköpfen (4.1, 4.2, 4.3) oder einem Einblickkopf (4.1, 4.2, 4.3) mit mehreren Ausblickköpfen (6.1, 6.2, 6.3) der Strahlengang zwischen diesen Einblickköpfen (4.1, 4.2, 4.3) und Ausblickköpfen (4.1, 4.2, 4.3) umschaltbar ist.

## Claims

1. Viewing device on a vehicle, in particular a combat vehicle, in which there is disposed below a roof panel (1) a user seat and in the region of the user seat a plurality of angular reflectors, which comprise in each case a look-in head (4.1, 4.2, 4.3) that is disposed in the vehicle and optically connected by a viewing channel (5.1, 5.2, 5.3) extending through the roof panel (1) to a look-out head (6.1, 6.2, 6.3) that is disposed on the roof panel (1), wherein for deflection of the incident light beam tilted reflective surfaces are disposed in each case in the look-out head (6.1, 6.2, 6.3) and in the look-in head (4.1, 4.2, 4.3), wherein the look-in heads (4.1 to 4.3) are so arranged that their look-in windows are disposed immediately adjoining one another at defined angles (α1, α2) along an arc (K) partially encircling the user seat (3.1) within the range of vision of the user (3), facing inwards and symmetrically relative to the direction of travel (F), and the look-out heads (6.1 to 6.3) are so arranged that their look-out windows are disposed immediately adjoining one another at the same defined angles along an arc, facing outwards and symmetrically relative to the direction of travel, wherein the arrangement is such that an, at least in sub-sections parallel, light beam (7.21) of defined diameter extends through the viewing channel (5.2), **characterized in that** in the look-in head (4.1 to 4.3) and in the look-out head (6.1 to 6.3) in each case an optical system (4.21, 6.21) is disposed, wherein the optical systems in the look-out heads (6.1 to 6.3) are so designed that the angular ranges covered in each case by the look-out heads immediately adjoin one another without overlaps and the optical systems in the look-in head (4.1 to 4.3) and in the look-out head (6.1 to 6.3) are disposed at such a distance from the respective reflective surfaces (4.22, 6.22) that a telescopic system arises.

2. Viewing device according to claim 1, **characterized in that** the arrangement is such that the parallel light beam (7.21) at least in the viewing channel (5.2) is perpendicular to the direction of the incident light beam (7.2).

3. Viewing device according to claim 1, **characterized in that** the look-out head (6.2') is disposed offset in or counter to the direction of travel relative to the look-in head (4.2').

4. Viewing device according to claim 3, **characterized in that** the arrangement is such that the parallel light beam (7.21') with the direction of the incident light beam (7.2') forms a defined acute angle and the reflective surface (6.22') of the look-out head (6.2'), viewed in the direction of travel, lies in front of the reflective surface (4.22') of the look-in head (4.2').

5. Viewing device according to one of claims 1 to 4, **characterized in that** the defined angles (α1, α2) of the mutually adjoining look-out windows are so selected and the beam path of the angular reflectors are so designed that the marginal regions of the incident light beams run parallel and no image overlaps occur.

6. Viewing device according to one of claims 1 to 5, **characterized in that** the angular reflectors are made of acrylic glass with vapour-deposited reflective surfaces.

7. Viewing device according to on of claims 1 to 6, **characterized in that** a filter is insertable into the beam path of each angular reflector.

8. Viewing device according to one of claims 1 to 7, **characterized in that** a screen is insertable into the beam path of each angular reflector.

9. Viewing device according to one of claims 1 to 8, **characterized in that** the look-out heads (6.1, 6.2, 6.3) are liftable into an elevated position.

10. Viewing device according to one of claims 1 to 9, **characterized in that** the look-out head (6.1, 6.2, 6.3) is disposed offset transversely of the direction of travel relative to the look-in head (4.1, 4.2, 4.3).

11. Viewing device according to one of claims 1 to 10, **characterized in that** with at least some of the look-out heads (6.1, 6.2, 6.3) in each case more than one look-in head (4.1, 4.2, 4.3) is associated.

12. Viewing device according to one of claims 1 to 10, **characterized in that** with at least some of the look-in heads (4.1, 4.2, 4.3) in each case more than one look-out head (6.1, 6.2, 6.3) is associated.

13. Viewing device according to claim 11 or 12, **characterized in that**, in the case of one look-out head (6.1, 6.2, 6.3) having a plurality of look-in heads. (4.1, 4.2, 4.3) or one look-in head (4.1, 4.2, 4.3) having a plurality of look-out heads (6.1, 6.2, 6.3), the beam path is switchable between said look-in heads (4.1, 4.2, 4.3) and look-out heads (6.1, 6.2, 6.3).

## Revendications

1. Dispositif visuel sur un véhicule, en particulier un véhicule de combat, dans lequel un siège d'utilisateur est disposé au-dessous d'une plaque de toit (1), et plusieurs miroirs d'angle sont disposés dans la zone du siège d'utilisateur lesquels miroirs d'angle présentent respectivement une tête d'observation (4.1, 4.2, 4.3) disposée dans le véhicule et reliée de façon optique par un canal visuel (5.1, 5.2, 5.3), amené à travers la plaque de toit (1), à une tête de visée (6.1, 6.2, 6.3), dans lequel des surfaces de miroir respectivement inclinées sont disposées pour dévier le faisceau de lumière incident dans la tête de visée (6.1, 6.2, 6.3) et dans la tête d'observation (4.1, 4.2, 4.3), dans lequel les têtes d'observation (4.1 à 4.3) sont disposées de telle sorte que leurs fenêtres d'observation sont disposées sous des angles prédéfinis (α1, α2) de façon immédiatement consécutive le long d'un arc de cercle (K) entourant en partie le siège d'utilisateur (3.1) dans la zone visuelle de l'utilisateur (3), de façon symétrique au sens de la marche (F) en étant tournées vers l'intérieur, et les têtes de visée (6.1 à 6.3) sont disposées de telle sorte que leurs fenêtres de visée sont disposées sous les mêmes angles prédéfinis de façon immédiatement consécutive le long d'un arc de cercle, de façon symétrique au sens de la marche en étant tournées vers l'extérieur, dans lequel l'agencement est tel qu'un faisceau de lumière (7.21) parallèle au moins dans des sections partielles et présentant un diamètre prédéfini parcourt le canal visuel (5.2), **caractérisé en ce que** dans la tête d'observation (4.1 à 4.3) et dans la tête de visée (6.1 à 6.3) respectivement est disposé un système optique (4.21, 6.21), dans lequel les systèmes optiques des têtes de visée (6.1 à 6.3) sont réalisés de telle sorte que les zones angulaires respectivement détectées par les têtes de visée sont immédiatement consécutives sans recouvrement et que les systèmes optiques de la tête d'observation (4.1 à 4.3) et de la tête de visée (6.1 à 6.3) sont disposés à une distance par rapport aux surfaces de miroir respectives (4.22, 6.22) de façon à créer un système télescopique.

2. Dispositif visuel selon la revendication 1, **caractérisé en ce que** l'agencement est tel que le faisceau de lumière parallèle (7.21) se trouve au moins dans le canal visuel (5.2) perpendiculairement à la direction du faisceau de lumière (7.2) incident.

3. Dispositif visuel selon la revendication 1, **caractérisé en ce que** la tête de visée (6.2') est disposée de façon décalée par rapport à la tête d'observation (4.2') dans le sens de la marche ou de façon contraire à celui-ci.

4. Dispositif visuel selon la revendication 3, **caractérisé en ce que** l'agencement est tel que le faisceau de lumière parallèle (7.21') forme avec la direction du faisceau de lumière incident (7.2') un angle aigu prédéfini et que la surface de miroir (6.22') de la tête de visée (6.2') se trouve devant la surface de miroir (4.22') de la tête d'observation (4.2'), vu dans le sens de la marche.

5. Dispositif visuel selon l'une quelconque des revendications 1 à 4, **caractérisé en ce que** l'angle prédéfini (α1, α2) des fenêtres de visée consécutives est choisi et que la trajectoire du faisceau des miroirs d'angle est conçue de telle sorte que les zones marginales des faisceaux de lumière incidents s'étendent en parallèle et qu'aucun chevauchement d'image ne soit créé.

6. Dispositif visuel selon l'une quelconque des revendications 1 à 5, **caractérisé en ce que** les miroirs d'angle se composent de verre acrylique avec des surfaces de miroir métallisées.

7. Dispositif visuel selon l'une quelconque des revendications 1 à 6, **caractérisé en ce qu'**un filtre peut être inséré dans la trajectoire du faisceau de chaque miroir d'angle.

8. Dispositif visuel selon l'une quelconque des revendications 1 à 7, **caractérisé en ce qu'**un diaphragme peut être inséré dans la trajectoire du faisceau de chaque miroir d'angle.

9. Dispositif visuel selon l'une quelconque des revendications 1 à 8, **caractérisé en ce que** les têtes de visée (6.1, 6.2, 6.3) peuvent être relevées dans une position élevée.

10. Dispositif visuel selon l'une quelconque des revendications 1 à 9, **caractérisé en ce que** la tête de visée (6.1, 6.2, 6.3) est disposée de façon décalée par rapport à la tête d'observation (4.1, 4.2, 4.3), transversalement au sens de la marche.

11. Dispositif visuel selon l'une quelconque des revendications 1 à 10, **caractérisé en ce que** plus d'une tête d'observation (4.1, 4.2, 4.3) est respectivement associée à au moins une partie des têtes de visée (6.1, 6.2, 6.3).

12. Dispositif visuel selon l'une quelconque des revendications 1 à 10, **caractérisé en ce** respectivement plus d'une tête de visée (6.1, 6.2, 6.3) est associée à au moins une partie des têtes d'observation (4.1, 4.2, 4.3).

13. Dispositif visuel selon la revendication 11 ou 12, **caractérisé en ce que** pour une tête de visée (6.1, 6.2, 6.3) avec plusieurs têtes d'observation (4.1, 4.2, 4.3) ou une tête d'observation (4.1, 4.2, 4.3) avec plusieurs têtes de visée (6.1, 6.2, 6.3) la trajectoire du faisceau peut être commutée entre ces têtes d'observation (4.1, 4.2, 4.3) et ces têtes de visée (6.1, 6.2, 6.3).
